Europäisches Patentamt

European Patent Office

Office européen des brevets

(19)

(11) Numéro de publication: **0 251 847 B1**

(12) **FASCICULE DE BREVET EUROPEEN**

(45) Date de publication de fascicule du brevet:
02.05.91

(51) Int. Cl.⁵: **B22C 1/00**

(21) Numéro de dépôt: **87401294.1**

(22) Date de dépôt: **10.06.87**

(54) **Moule-carapace cristobalitique pour fonderie, compositions de bain et procédé de préparation dudit moule.**

(30) Priorité: **10.06.86 FR 8608337**

(43) Date de publication de la demande:
**07.01.88 Bulletin 88/01**

(45) Mention de la délivrance du brevet:
**02.05.91 Bulletin 91/18**

(84) Etats contractants désignés:
**BE DE FR GB IT NL**

(56) Documents cités:
**FR-A- 1 521 648**
**FR-A- 2 371 257**
**US-A- 3 249 972**
**US-A- 3 540 519**

(73) Titulaire: **SOCIETE NATIONALE D'ETUDE ET DE CONSTRUCTION DE MOTEURS D'AVIA-TION, "S.N.E.C.M.A."**
**2, Boulevard du Général Martial Valin**
**F-75015 Paris(FR)**

(72) Inventeur: **Cuisin, Thierry André**
**158, Rue du Ménil**
**F-92600 Asnieres(FR)**
Inventeur: **Dody, Emmanuel, Jean-Noel**
**68, rue Jacques Prévert**
**F-95320 Saint Leu la Foret(FR)**
Inventeur: **Flochel, Jean-Pierre**
**23, Rue H. Moreau**
**F-92600 Asnieres(FR)**

(74) Mandataire: **Moinat, François et al**
**S.N.E.C.M.A. Service des Brevets Boîte Pos-tale 81**
**F-91003 Evry Cédex(FR)**

## Description

La présente invention concerne un moule-carapace cristobalitique pour fonderie, plus particulièrement pour fonderie de précision ; elle concerne également les produits et le procédé utilisés pour la préparation dudit moule.

Lors de la coulée de certaines pièces, notamment par exemple de pièces en solidification dirigée, les moules-carapaces utilisés sont soumis à des contraintes importantes dans des conditions (températures, chocs thermiques) extrêmement dures. Or on sait qu'il n'est pas possible d'améliorer notablement les propriétés mécaniques de ces moules-carapaces en augmentant l'épaisseur de leur paroi, au-delà d'une épaisseur de l'ordre de 8 mm, sans entraîner des risques sérieux de détérioration des qualités métallurgiques des pièces. On a donc recherché à réaliser ces améliorations souhaitées des propriétés mécaniques en modifiant la composition et/ou la structure du matériau constituant le moule-carapace.

Parmi les matériaux les mieux adaptés pour constituer des moules-carapaces utilisables à des températures élevées on a déjà décrit l'utilisation d'un mélange de silice et de zircon. Le procédé pour réaliser des moules-carapaces avec ledit matériau consiste dans une première étape à immerger un modèle en cire dans une boue composée de grains fins de matière réfractaire (zircon ) dans un liant (silice colloïdale) et dans une seconde étape à appliquer des grains de matière réfractaire sur le revêtement de boue humide ainsi réalisée ; après séchage on repète ces étapes et on réalise ainsi un moule-carapace ayant l'épaisseur souhaitée (4 à 8mm).

On a déjà décrit par ailleurs des noyaux de fouderie dans lesquels on a introduit, à côté de la silice fondue, d'une farine de zircon, d'une résine de silicone formant liant, et éventuellement d'un lubrifiant et d'un catalyseur, de 2,5 à 3,5 % en poids de cristobalite. Ces noyaux de fonderie concourent , après avoir été enrobés de cire, à réaliser les moules-carapaces tels que décrits ci-dessus. Il est clair que les noyaux de fonderie ainsi décrits possèdent, du fait de la présence de cristobalite, des propriétés mécaniques intéressantes mais les problèmes qui se posent pour la bonne tenue des noyaux de fonderie sont différents de ceux qui se posent dans le cas des moules-carapaces.

Enfin, on a déjà décrit, pour des utilisations diverses, le processus de transformation, à des températures élevées, de silice en cristobalite sous l'influence de divers catalyseurs minéraux (sels alcalins ou alcalino-terreux par exemple) mais on sait aussi que ladite cristobalite se présente sous deux formes cristallines , une forme $\alpha$ stable à basse température (inférieure à environ 250°C) et une forme $\beta$ stable à haute température, lesdites formes ayant des masses spécifiques différentes.

Compte tenu de cet ensemble d'informations, la Demanderesse a eu l'idée de voir s'il n'était pas possible, en vue d'améliorer leurs propriétés mécaniques aux hautes températures, de réaliser des moules-carapaces comportant de la cristobalite. La réussite de cette idée n'était nullement évidente car les variations de masse spécifique entre les deux variétés de cristobalites risquaient de détruire ou de fragiliser lesdits moules.

Il a été trouvé :
- d'une part, que pour bénéficier de l'amélioration des propriétés provenant de la cristobalite, il convenait de ne pas utiliser de catalyseur minéral de transformation de silice, (sels alcalins ou alcalins-terreux par exemple)
- d'autre part, que pour éviter les effets nocifs des transformations des formes $\alpha$ et $\beta$ de la cristobalite, il était souhaitable de contrôler et de limiter la quantité de cristobalite présente dans le moule-carapace lorsque celui-ci est soumis à des variations de températures dans la zone où s'opère le changement de forme cristalline de la cristobalite.

La présente invention concerne donc tout d'abord un bain (ou une boue) aqueux permettant, par le trempage d'une cire, de réaliser une couche de matériau donnant naissance à un moule-carapace, ledit bain comportant en poids de 20 à 40% de silice colloïdale, de 20 à 40% de farine de zircon, de 15 à 25% de sable de silice et étant caractérisé en ce qu'il contient
de 15 à 35 % de farine de silice fondue
et de 1 à 5 % de farine de cristobalite.

On rappelle que
- une farine est un matériau en poudre fine présentant une granulométrie inférieure à 50 millièmes de millimètre,
- un sable est un matériau en grains ayant une granulométrie moyenne comprise entre environ 0,25 et environ 0,50 mm.

Dans l'invention on utilisera donc la cristobalite sous forme d'une farine (granulométrie inférieure à 50 millièmes de millimètre) mais de préférence sous forme d'une farine fine de granulométrie inférieure à environ 20 millièmes de millimètre.

On notera que le bain utilisé ne comporte ni liant (organique ou siliconé) ni catalyseur de transformation de silice en cristobalite ; on pense que la cristobalite ajoutée joue le rôle de catalyseur ou de germe.

La présente invention concerne également un procédé pour réaliser un moule-carapace en utilisant un bain selon l'invention ; ledit procédé consiste à réaliser, selon un processus connu, une série de trempage-séchage d'un modèle en cire dans un bain selon l'invention puis à traiter thermiquement le précurseur obtenu pour développer et contrôler la teneur en cristobalite du moule-carapace ; ledit traitement thermique est caractérisé en ce que le précurseur est introduit dans un four que l'on chauffe jusqu'à une température comprise entre 1050 à 1200°C, qu'on maintient ladite température pendant une durée comprise entre 1 à 2 h et qu'on laisse ensuite l'ensemble refroidir jusqu'à la température ambiante.

On notera que la durée de montée en température du four est de l'ordre de 1 à 2 heures et que la durée du refroidissement est également de l'ordre de 2 heures. Lorsque l'on analyse la composition du moule-carapace ainsi réalisé on s'aperçoit qu'il contient, de façon uniformément répartie, de 10 à 30% en poids de cristobalite ; cette quantité contrôlée de cristobalite évite les difficultés au moment des changements de structure de ladite cristobalite (forme $\alpha$, forme $\beta$) lorsque le moule-carapace est soumis à des variations mêmes rapides de température.

L'invention concerne donc des moules-carapaces caractérisés en ce qu'ils contiennent de 10 à 30% en poids de cristobalite.

Les moules selon l'invention présentant une stabilité dimensionnelle et des propriétés mécaniques remarquables peuvent être utilisés pour tout moulage, notamment de précision, jusqu'à des températures d'environ 1600°C. On notera que lorsque le métal (ou l'alliage) fondu est versé dans ledit moule-carapace la structure du matériau constituant ce moule va se modifier ; c'est ainsi par exemple qu'à une température de 1500°C la totalité de la silice présente dans ledit moule sera rapidement (durée quelques minutes) transformée en cristobalite, ce qui conférera au moule des propriétés optimales. Si l'on avait utilisé des composés tels que des catalyseurs, ou des additifs divers, il se serait alors formé, à côté des cristaux de cristobalites, des parties vitreuses qui auraient affaibli les propriétés du moule ; une des caractéristiques des moules-carapaces selon l'invention est que, chauffés à température élevée, ils donnent naissance à des moules dans lesquels au moins 95% de la silice présente sont transformés en cristobalite.

Les exemples non limitatifs ci-après illustrent l'invention.

EXEMPLE 1.

On a réalisé des boues (barbotines) aqueuses contenant 24% en poids de silice colloïdale, 16,7 % de sable de silice, 3,5 % de farine de cristobalite et des proportions variables de farine de zircon et de farine de silice fondue.

On a trempé à plusieurs reprises dans ces diverses boues une cire et on a réalisé ainsi des moules-carapaces d'épaisseur d'environ 6 mm.

Ces moules-carapaces secs ont été introduits dans un four dont on a monté progressivement la température jusqu'à 1150°C ; la durée totale de montée en température a été de 1 heure 30 ; on a ensuite maintenu cette température à 1150°C pendant 1 heure puis le four s'est refroidi progressivement jusqu'à la température ambiante, la durée de ce refroidissement a été d'environ 2 heures.

Il a été trouvé que dans ces conditions on réalisait des moules-carapaces dont la teneur en cristobalite $\alpha$ (mesurée à la température ambiante) était d'environ 20 %.

Des éprouvettes prélevées dans des moules-carapaces utilisables sous cette forme, ont été soumises, afin de les tester, à un chauffage à 1500°C pendant des durées variables de 3 à 15 minutes. On a mesuré la déformée obtenue en mettant en oeuvre un test de déformation sous contrainte constante à 1500°C (test dérivé de la détermination du module de rupture par flexion, trois points à température élevée décrit dans la norme PRER18 de 1970 révisée en 1978).

Les résultats obtenus sont représentés dans le tableau ci-après :

EP 0 251 847 B1

| Essais n° | composition de la barbotine | | Déformée (en pour mille) à t = 10 mn après des durées de chauffage de | | |
|---|---|---|---|---|---|
| | farine de zircon % | farine de silice fondue % | 3 mn | 10 mn | 15 mn |
| | | | (contrainte constante de 0,5MPa) | | |
| 1 | 38 | 17,8 | 3,25 | 2,25 | 1,75 |
| 2 | 35,5 | 20,3 | 2,75 | 2 | 1,50 |
| 3 | 33 | 22,8 | 2,25 | 1,75 | 1,20 |
| 4 | 30,5 | 25,3 | 2 | 1,50 | 1,1 |
| 5 | 28 | 27,8 | 1,75 | 1,50 | 1 |
| 6 | 25,5 | 30,3 | 1,6 | 1,50 | 1 |

Ces résultats montrent qu'à la température de 1500°C on constate une amélioration rapide des propriétés mécaniques des moules-carapaces lorsque la durée du chauffage augmente de 3 à 15 mn ; ce résultat est dû, et cela a été confirmé par des mesures cristallographiques, à une augmentation, au fur et à mesure que la durée du chauffage augmente, de la teneur en cristobalite du matériau ; les résultats obtenus montrent que pour les moules des essais 4,5 et 6 et une durée du chauffage de 15 mn à 1500°C la transformation, en cristobalite de la silice contenue dans le moule-carapace, est quasiment totale et supérieure à environ 95 % (et de préférence de l'ordre de 98%).

**Revendications**

1. Bain (ou boue) aqueux permettant, par trempage d'une cire, de réaliser une couche de matériau donnant naissance à un moule- carapace, ledit bain comportant de 20 à 40% en poids de silice colloïdale, de 20 à 40% en poids de farine de zircon, et de 15 à 25% en poids de sable de silice et étant caractérisé en ce qu'il contient
de 15 à 35 % en poids de farine de silice fondue
et de 1 à 5 % en poids de farine de cristobalite, une farine étant une poudre de granulométrie inférieure à 50 micromètres, et un sable étant constitué de grains ayant une granulométrie comprise entre 0,25 et 0,50 mm

2. Procédé pour réaliser un moule-carapace par utilisation du bain (ou boue) selon la revendication 1, ledit procédé consistant à réaliser, selon un processus connu, une série de trempage-séchage d'un modèle en cire dans ledit bain puis à traiter thermiquement le précurseur obtenu caractérisé en ce que ledit traitement thermique consiste à introduire ledit précurseur dans un four que l'on chauffe jusqu'à une température comprise entre 1050 et 1200°C, dans un temps de 1 à 2 heures de montée en température, à maintenir ladite température pendant une durée comprise entre 1 et 2 h et à laisser ensuite l'ensemble refroidir jusqu'à température ambiante, pour une durée de 2 heures.

3. Moule-carapace obtenu selon le procédé de la revendication 2 caractérisé en ce qu'il contient de 10 à 30% en poids de cristobalite.

4. Utilisation d'un moule-carapace selon la revendication 3 pour la réalisation de moulage à température suffisante pour que au moins 95% de la silice présente dans ledit moule-carapace avant le début du moulage se transforme en cristobalite.

**Claims**

4

1. An aqueous bath (or slurry), enabling one to obtain, by the dipping into it of a wax model, a layer of material giving rise to the formation of a shell mould, the said bath comprising from 20 to 40% by weight of colloidal silica, from 20 to 40% by weight of zircon flour, and from 15 to 25% by weight of silica sand and being characterised in that it contains
from 15 to 35% by weight of melted silica flour
and from 1 to 5% by weight of cristobalite flour, a flour being a powder with a grain size less than 50 micrometres and a sand being made up of grains of a size between 0.25 and 0.50 mm.

2. A process for producing a shell mould by using a bath (or slurry) in accordance with Claim 1, the said process consisting of carrying out, by a known process, a series of dipping and drying operations, in the said bath, on a wax model and then heat treating the precursor so obtained, characterised in that the said heat treatment consists of placing the said precursor in an oven which is heated to a temperature of between 1050°C and 1200°C, in a temperature rise time of from 1 to 2 hours and of maintaining the said temperature for a period between 1 and 2 hours, and of then allowing the temperature to fall to ambient over a period of 2 hours.

3. A shell mould obtained in accordance with the process in Claim 2, characterised in that it contains from 10 to 30% by weight of cristobalite.

4. The use of a process in accordance with Claim 3 for the carrying out of casting at a temperature sufficient so that at least 95% of the silica present in the said shell mould before the start of casting is converted into cristobalite.

## Ansprüche

1. Wässeriges Bad (oder wässeriger Schlamm) zur Herstellung einer zur Bildung einer Maskenform führenden Materialschicht durch Eintauchen eines Wachses, wobei das Bad 20 bis 40 Gewichtsprozent kolloidales Siliziumoxid, 20 bis 40 Gewichtsprozent Zirkon-Mehl und 15 bis 25 Gewichtsprozent Siliziumoxid-Sand aufweist,
gekennzeichnet durch einen Gehalt von
   - 15 bis 35 Gewichtsprozent Quarzglas-Mehl und von
   - 1 bis 5 Gewichtsprozent Cristobalit-Mehl, wobei ein Mehl ein Pulver mit einer Korngröße von als 50 Mikrometer ist und ein Sand aus Körnern mit einer Korngröße zwischen 0,25 und 0,50 Millimetern besteht.

2. Verfahren zur Herstellung einer Maskenform unter Verwendung des Bads (oder Schlamms) nach Anspruch 1, bei dem ein Wachsmodell in bekannter Weise mehrmals in das genannte Bad eingetaucht und anschließend getrocknet wird, und dann der so gewonnene Vorläufer thermisch behandelt wird, dadurch gekennzeichnet, daß diese thermische Behandlung darin besteht,
daß der Vorläufer in einen Ofen eingebracht wird, der in einer Temperatur-Anstiegszeit von 1 bis 2 Stunden auf eine Temperatur zwischen 1050° und 1200° erwärmt wird,
daß diese Temperatur während einer Zeit zwischen 1 und 2 Stunden aufrechterhalten wird und
daß man das Ganze während einer Dauer von 2 Stunden auf Umgebungstemperatur abkühlen läßt.

3. Nach dem Verfahren nach Anspruch 2 hergestellte Maskenform, dadurch gekennzeichnet, daß sie 10 bis 30 Gewichtsprozent Cristobalit enthält.

4. Verwendung einer Maskenform nach Anspruch 3 zum Gießen bei einer Temperatur, die ausreichend groß ist, um wenigstens 95% des vor dem Gießen in der Maskenform vorhandenen Siliziumoxids umzuwandeln.